# EUROPÄISCHE PATENTANMELDUNG

(11) **EP 2 952 089 A1**
(43) Veröffentlichungstag der Anmeldung: **09.12.2015**
(21) Anmeldenummer: 15164159.4
(22) Anmeldetag: 20.04.2015
(51) Int. Cl.: A01F 15/18, A01F 15/07

(54) **RUNDBALLENPRESSE**

(30) Priorität: 05.06.2014 DE 102014008008
(71) Anmelder: Usines Claas France S.A.S, 57140 St. Rémy / Woippy (FR)
(72) Erfinder: Baros, Geoffroy, 90130 Montreux Chateau (FR); Insalaco, Damien, 57360 Amneville-les-Thermes (FR)
(74) Vertreter: Budach, Steffen

(57) **Zusammenfassung**

Eine Rundballenpresse (1) weist mehrere Wellen (6) auf, die um eine Presskammer herum angeordnet sind und Pressrollen und von einer gemeinsamen Kette angetriebene Kettenräder (8) tragen. Wenigstens eines der Kettenräder (8) und die es tragende Welle (6) weisen zusammenwirkende Führungsmittel (15,17) auf, die das Kettenrad (8) und die Welle (6) in Drehrichtung formschlüssig verbinden und eine Bewegung des Kettenrades (8) in Axialrichtung der Welle (6) zulassen; außerdem sind Mittel (33, 40, 41) zum Fixieren der axialen Position des Kettenrades (8) an der Welle (6) vorgesehen.

## Beschreibung

Die vorliegende Erfindung betrifft eine Rundballenpresse zum Formen von Ballen aus verdichtetem landwirtschaftlichem Erntegut. Die Presskammer einer solchen Rundballenpresse ist herkömmlicherweise an ihrem Umfang begrenzt durch eine Vielzahl von Pressrollen, durch deren Rotation ein zwischen den Rollen gehaltener Ballen aus Erntegut in Drehung versetzt und dabei verdichtet wird. Um die Pressrollen anzutreiben, tragen die Wellen, an denen die Pressrollen angebracht sind, jeweils ein Kettenrad, wobei eine Vielzahl von Kettenrädern jeweils von einer gleichen Antriebskette umschlungen ist.

Wenn die Kettenräder nicht exakt in einer gleichen Ebene liegen, dann wird die Antriebskette beim Umlauf um die Kettenräder in axialer Richtung der Wellen ausgelenkt, was zu starker Reibungsbeanspruchung und schnellem Verschleiß der Kette und der Kettenräder führt. Um solchen vorzeitigen Verschleiß zu vermeiden, müssen die Kettenräder mit hoher Genauigkeit montiert werden, was den Zusammenbau der herkömmlichen Rundballenpressen mühsam und kostspielig macht.

Aufgabe der vorliegenden Erfindung ist, eine Rundballenpresse zu schaffen, bei der die Positionierung der Kettenräder in einer gleichen Ebene erleichtert ist.

Die Aufgabe wird gelöst, indem bei einer Rundballenpresse mit einer Mehrzahl von um eine Presskammer herum angeordneten, Pressrollen und von einer gemeinsamen Kette angetriebene Kettenräder tragenden Wellen wenigstens eines der Kettenräder und die das Kettenrad tragende Welle zusammenwirkende Führungsmittel aufweisen, die das Kettenrad und die Welle in Drehrichtung formschlüssig verbinden und eine Bewegung des Kettenrades in Axialrichtung der Welle zulassen, und ferner Mittel zum Fixieren der axialen Position des Kettenrades an der Welle vorgesehen sind.

Die von der gemeinsamen Kette umschlungenen Kettenräder können sämtlich axial verstellbar sein; vorzugsweise ist maximal eines dieser Kettenräder axial nicht verstellbar. Wenn ein nicht verstellbares Kettenrad vorhanden ist, wird zweckmäßigerweise bei der Montage der Rundballenpresse die axiale Position sämtlicher anderen mit derselben Kette im Eingriff stehenden Kettenräder an diesem einen nicht verstellbaren Kettenrad ausgerichtet.

Die zusammenwirkenden Führungsmittel von Kettenrad und Welle können insbesondere komplementäre Keilwellenprofile der Welle und des Kettenrads umfassen.

Um die Position eines Kettenrades in Axialrichtung seiner Welle exakt und reproduzierbar einstellen zu können, kann eine Stellschraube vorgesehen sein, die in Bezug auf Welle und Kettenrad drehbar und mit wenigstens einem unter Kettenrad und Welle ausgewählten Bauteil über einen Gewindeeingriff verbunden ist. Der Gewindeeingriff setzt seine Drehung der Stellschraube in eine Axialbewegung der Stellschraube und des mit ihr in Gewindeeingriff stehenden Bauteils gegeneinander um. Er kann durch ineinander eingreifende Gewinde der Stellschraube und des Bauteils selbst gebildet sein oder durch ein Gewinde der Stellschraube und eines einer Mutter, die an dem Bauteil platziert ist, um eine aus der Drehung der Stellschraube resultierende Axialbewegung der Mutter auf das Bauteil zu übertragen.

Das jeweils andere Bauteil könnte mit der Stellschraube ebenfalls über einen Gewindeeingriff verbunden sein, wobei die beiden Gewindeeingriffe, um eine Drehung der Schraube in eine axiale Bewegung von Welle und Kettenrad gegeneinander umzusetzen, unterschiedliche Steigungen aufweisen müssen. Vorzugsweise steht die Schraube mit dem jeweils anderen Bauteil in einem drehbaren, aber axial unbeweglichen Eingriff.

Um das Kettenrad in einer eingestellten Position an seiner Welle axial zu fixieren, kann ein Stift durch eine Bohrung der Stellschraube hindurch in eine Aussparung der Welle oder des Kettenrades einführbar sein, um durch gleichzeitiges Eingreifen in die Bohrung und die Aussparung die Stellschraube drehfest zu fixieren. Bei der Aussparung der Welle kann es sich insbesondere um eine Nut des oben erwähnten Keilwellenprofils handeln.

Um eine Verstellung des Kettenrades in axialer Richtung verkantungsfrei zu führen, kann die Stellschraube zweckmäßigerweise ein sich rings um die Welle erstreckendes Gewinde aufweisen.

Ein solches Gewinde ist vorzugsweise als Innengewinde ausgeführt, das mit einem Außengewinde an einem Schaft des Kettenrades zusammenwirkt.

Einer anderen Ausgestaltung zu Folge ist die Stellschraube nicht auf der Welle der Achse sondern radial zu dieser versetzt angeordnet. Dazu kann die Stellschraube mit der Welle über einen Trägerarm verbunden sein, der von der Welle radial absteht und einen ersten Durchgang aufweist, in dem die Stellschraube drehbar aufgenommen ist.

Wenn die Stellschraube ferner in einem zweiten Durchgang des Kettenrades drehbar aufgenommen ist, sollte wenigstens einer dieser Durchgänge ein Gewinde aufweisen, das mit einem Gewinde der Stellschraube zusammenwirkt, um eine Drehung der Stellschraube in eine Translation in Richtung der Welle umzusetzen. Auch hier können beide Durchgänge Gewinde mit unterschiedlicher Steigung aufweisen, vorzugsweise jedoch ist die Stellschraube in dem anderen Durchgang axial unbeweglich gehalten.

Wenn dieser andere Durchgang der Durchgang des Trägerarms ist, bewegt sich die Schraube bei einer Drehung nicht gleichzeitig relativ zur Welle in axialer Richtung, was das Drehen der Schraube mit einem geeigneten Werkzeug erleichtert.

Die Stellschraube kann eine Kontermutter tragen, mit deren Hilfe sie drehfest fixiert werden kann, wenn eine geeignete Stellung des Kettenrades erreicht ist.

Der Trägerarm kann als eine am Umfang der Welle fixierte Spannschelle ausgebildet sein.

Einer aufgrund ihrer Einfachheit bevorzugten Ausgestaltung zu Folge ist der Trägerarm an eine Stirnseite der Welle angeschraubt.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Seitenansicht einer Rundballenpresse;
- Fig. 2: eine auseinandergezogene Darstellung eines Kettenrades und eines das Kettenrad tragenden Wellenabschnitts gemäß einer ersten Ausgestaltung der Erfindung;
- Fig. 3: einen axialen Schnitt durch das Kettenrad und den Wellenabschnitt aus Fig. 2 in zusammengefügtem Zustand;
- Fig. 4: eine auseinandergezogene perspektivische Ansicht eines Kettenrades und eines Wellenabschnitts gemäß einer zweiten Ausgestaltung der Erfindung;
- Fig. 5: einen zu Fig. 3 analogen Schnitt durch den Wellenabschnitt und das Kettenrad der zweiten Ausgestaltung;
- Fig. 6: eine auseinandergezogene perspektivische Ansicht eines Kettenrades und eines Wellenabschnitts gemäß einer dritten Ausgestaltung der Erfindung; und
- Fig. 7: einen zu Fig. 3 und Fig. 5 analogen Schnitt gemäß der dritten Ausgestaltung.

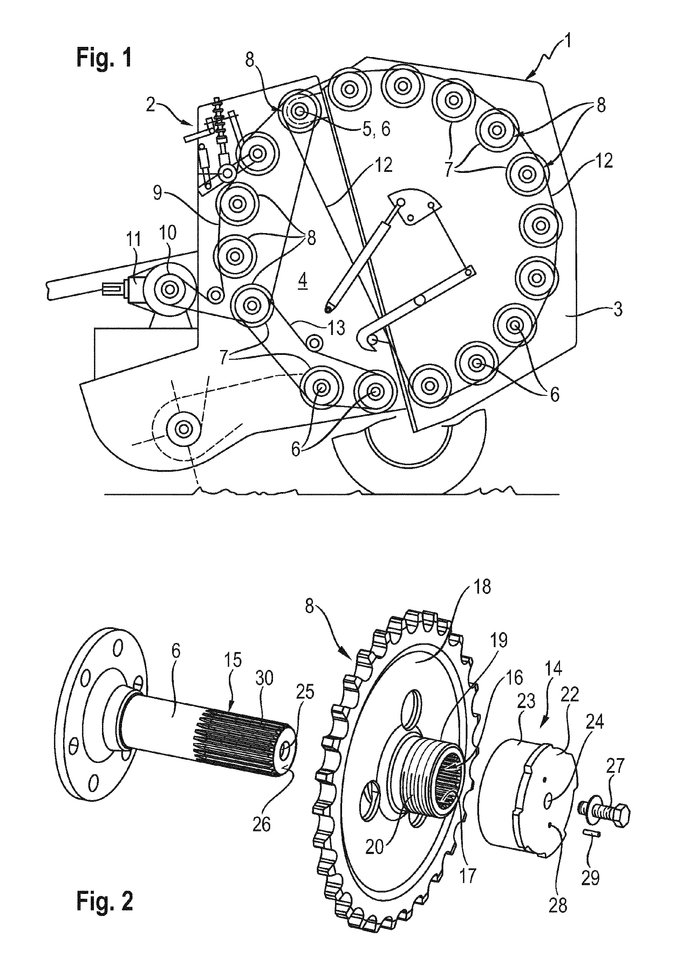

Fig. 1 zeigt eine Rundballenpresse 1 und Teile ihrer inneren Komponenten in einer schematischen Seitenansicht. Die Rundballenpresse 1 hat ein Gehäuse in Form einer vorderen und einer hinteren Halbschale 2 bzw. 3, die eine Presskammer 4 umschließen. Die Halbschalen 2, 3 sind um eine Achse 5 schwenkbar miteinander verbunden, so dass die hintere Halbschale 3 hochgeklappt werden kann, um die Presskammer 4 zu öffnen und einen fertigen Ballen daraus zu entlassen. Rings um die Presskammer 4 sind zahlreiche Wellen 6 an vorderer oder hinterer Halbschale 2, 3 drehbar gelagert. Die Wellen 6 tragen jeweils eine Pressrolle 7 zum Komprimieren des Ballens in der Presskammer 4 und ein Kettenrad 8.

Eine erste Kette 9 umschlingt ein Antriebsrad 10, das über ein Kegelradgetriebe 11 an eine Zapfwelle eines Traktors kuppelbar ist, an den die Rundballenpresse 1 als Anhänger angehängt ist. Die Kette 9 umschlingt ferner mehrere der Kettenräder 8 in einem oberen Bereich der vorderen Halbschale 2. Die Positionen der Kettenräder 8 auf ihren Wellen 6 sind axial justiert, so dass sie in einer gleichen Ebene mit dem Antriebsrad 10 liegen.

Die Welle 6 des höchstgelegenen dieser Kettenräder 8 ist koaxial zur die Halbschalen 2, 3 verbindenden Achse 5. Sie trägt ein (in Fig. 1 nicht einzeln erkennbares) zweites Kettenrad 8, das in einer gleichen Ebene mit den Kettenrädern 8 der hinteren Halbschale 3 liegt und zusammen mit diesem von einer zweiten Kette 12 umschlungen ist. So ist eine Antriebsmomentübertragung auf die Pressrollen 7 der hinteren Halbschale 3 über die gelenkige Verbindung zwischen den Halbschalen 2, 3 hinweg möglich.

Auch die unterste von der ersten Kette 9 umschlungene Welle 6 ist mit einem zweiten Kettenrad 8 bestückt, das zusammen mit Kettenrädern 8 in einem unteren Teil der vorderen Halbschale 2 von einer dritten Kette 13 umschlungen ist. Über die Zapfwelle eingespeistes Antriebsmoment verteilt sich über die Ketten 9, 12, 13 auf sämtliche die Presskammer 4 umgebenden Pressrollen 7.

Fig. 2 zeigt in einer auseinandergezogenen perspektivischen Ansicht einen Abschnitt einer Welle 6, das dazugehörige Kettenrad 8 und eine Stellschraube 14 zum Justieren der axialen Position des Kettenrades 8 an der Welle 6 gemäß einer ersten Ausgestaltung der Erfindung. An der Spitze der Welle 6 ist ein Keilwellenprofil 15 gebildet. Das Kettenrad 8 umfasst eine am Rand gezähnte Radscheibe 18 und einen von der Radscheibe 18 an deren von der Welle 6 abgewandten Seite abstehenden, außen mit einem Gewinde 20 versehenen Schaft 19. Das Kettenrad 8 hat einen zentralen Durchgang 16, der an seiner Innenseite ein komplementäres Keilwellenprofil 17 aufweist, so dass das Kettenrad 8 in axialer Richtung auf die Welle 6 aufgeschoben werden kann und dabei die Keilwellenprofile 15, 17 drehfest ineinandergreifen.

Eine Stellschraube 21 ist hier becherförmig ausgebildet, mit einem plattenförmigen Kopf 22 und einem rohrförmigen Schaft 23, der an seiner in Fig. 2 nicht sichtbaren Innenfläche ein zum Gewinde 20 komplementäres Innengewinde aufweist. Vorsprünge am Rand des plattenförmigen Kopfes ermöglichen die formschlüssige Platzierung eines Spannschlüssels zum Drehen Stellschraube 21. Eine zentrale Bohrung 24 des Kopfes 22 ist vorgesehen, um eine in eine Gewindebohrung 25 an einer Stirnseite 26 der Welle 6 eingreifende Schraube 27 aufzunehmen.

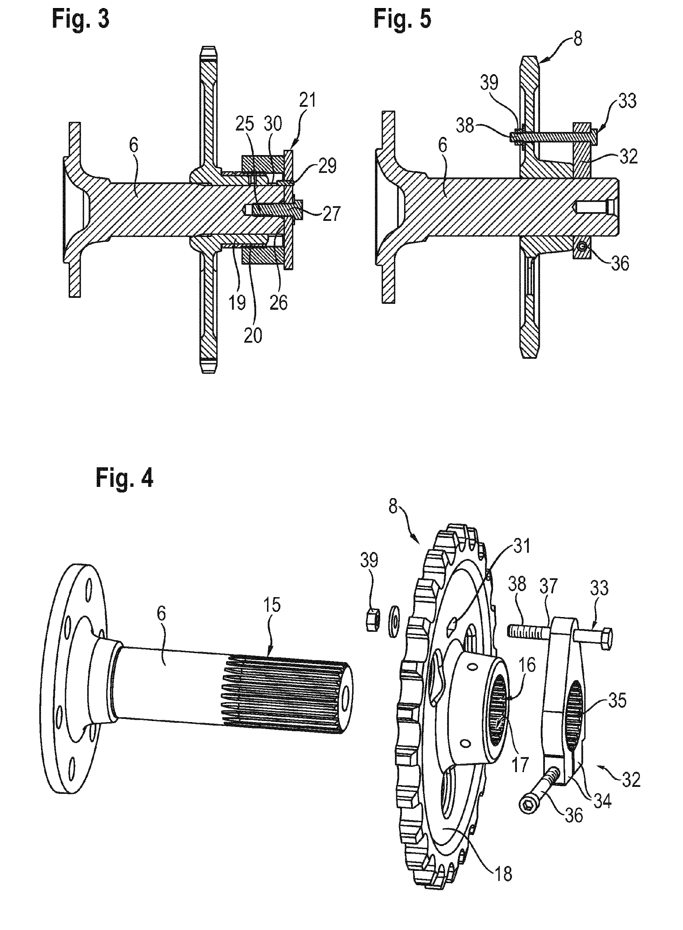

Bei einem Zusammenbau der Rundballenpresse 1 wird die Schraube 27, wie in Fig. 3 zu erkennen, so weit in die Gewindebohrung 25 eingeschraubt, dass die Stellschraube 21 zwischen dem Kopf der Schraube 27 und der Stirnseite 26 axial unbeweglich gehalten, aber um die Schraube 27 herum drehbar ist. Durch Drehen der Stellschraube 21, während sich deren Gewinde 20 mit dem Innengewinde der Stellschraube 21 in Eingriff befindet, ist das Kettenrad 8 auf der Welle 6 in axialer Richtung präzise justierbar. Wenn das Kettenrad 8 eine Position erreicht hat, in der es mit anderen von derselben Kette umschlungenen Kettenrädern 8 in einer gleichen Ebene liegt, wird die Stellschraube 21 fixiert, indem durch eine weitere Bohrung 28 des Kopfs 22 ein Stift 29 in eine Nut 30 des Keilwellenprofils 15 der Welle 6 hineingetrieben wird.

In der in Fig. 3 gezeigten Konfiguration ist der Stift 29 so gut wie vollständig in der Stellschraube 21 und der Nut 30 versenkt und kann nicht wieder herausgezogen werden. Eine nachträgliche Korrektur der Position des Kettenrades 8 ist dennoch problemlos möglich; wenn die Schraube 27 gelöst wird, können Stellschraube und Kettenrad 8 axial weit genug verschoben werden, um den Stift 29 aus der Nut 30 zu lösen. Dann kann auch die Stellschraube 21 vom Schaft 19 abgeschraubt werden, so dass das ins Innere der Stellschraube eingreifende Ende des Stifts 29 zugänglich wird. Der Stift 29 kann dann entfernt werden, und Welle 6, Kettenrad 8 und Stellschraube 21 können erneut zusammengefügt und justiert werden.

Fig. 4 zeigt eine zu Fig. 2 analoge perspektivische Ansicht gemäß einer zweiten Ausgestaltung der Erfindung. Die Welle 6 ist mit der in Fig. 2 gezeigten identisch. Das Kettenrad 8 hat auch hier einen zentralen Durchgang 16 mit zum Keilwellenprofil 15 der Welle 6 komplementären Keilwellenprofil 17. In der Radscheibe 18 ist, gegen den zentralen Durchgang 16 nach außen versetzt, eine Öffnung 31 gebildet, hier in Form eines sich über eine kurze Entfernung in Umfangsrichtung erstreckenden Langlochs.

Ein Trägerarm 32 für eine hier mit 33 bezeichnete Stellschraube ist hier als Spannschelle ausgebildet, mit einer von zwei Schenkeln 34 umgriffenen, die Spitze der Welle 6 aufnehmenden Öffnung 35 und einer Schraube 36, die die Bohrungen in den Schenkeln 34 durchsetzt und die festgezogen werden kann, um die Schenkel 34 gegen die Welle 6 zu pressen und so den Trägerarm 32 an der Welle 6 zu fixieren.

Ein gewindeloser Schaftabschnitt 37 der Stellschraube 33 erstreckt sich im montierten Zustand, wie in Fig. 5 gezeigt, axial durch eine Bohrung des Trägerarms 32, und ein Gewindeabschnitt 38 des Schafts erstreckt sich durch die Öffnung 31 der Radscheibe 18. Durch Verdrehung der Stellschraube 33 gegen eine an der vom Trägerarm 32 abgewandten Seite der Radscheibe 18 angeordnete Mutter 39 kann das Kettenrad 8 gegen den Trägerarm 32 gezogen werden. Eine nicht dargestellte Kontermutter kann am Gewindeabschnitt 38 zwischen der Radscheibe 18 und dem Trägerarm 32 vorgesehen sein, um, wenn die axiale Position des Kettenrads 8 erfolgreich justiert ist, gegen die Radscheibe 18 geschraubt zu werden und sie so axial zu fixieren.

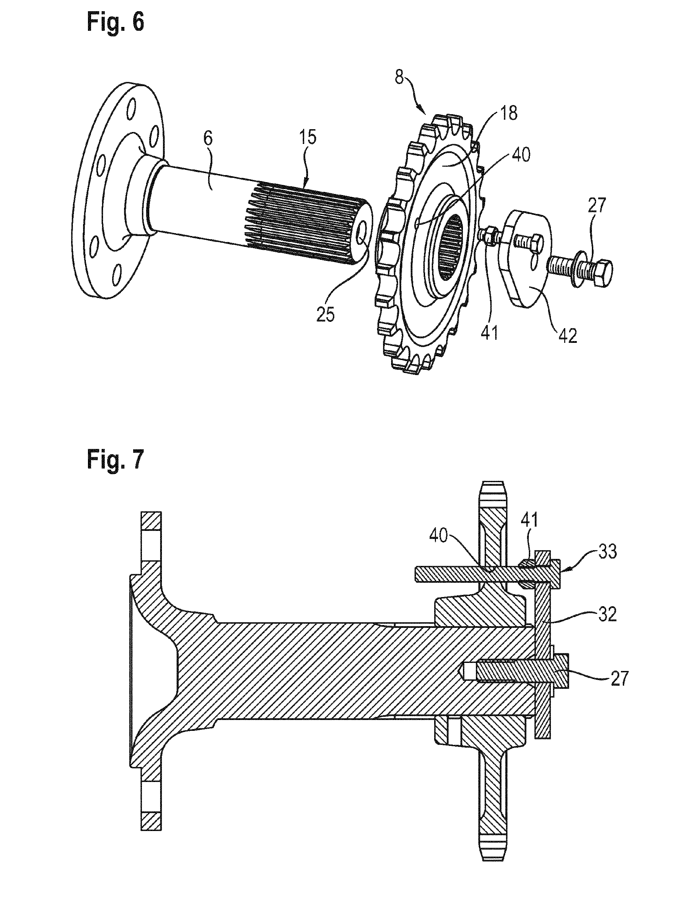

Fig. 6 zeigt eine Welle 6 und Kettenrad 8 gemäß einer dritten Ausgestaltung der Erfindung. Die Welle 6 ist wiederum identisch mit der in Fig. 2 gezeigten, das Kettenrad 8 weist in seiner Radscheibe 18 eine Gewindebohrung 40 auf. Der Trägerarm 42 ist hier als Platte ausgebildet, die mithilfe einer in die Gewindebohrung 25 eingreifenden Schraube 27 an der Stirnseite 26 der Welle 6 in einer solchen Orientierung befestigt wird, dass die sich durch eine Bohrung des Trägerarms 42 erstreckende Stellschraube 33 in die Gewindebohrung 40 eingeschraubt werden kann. Eine Mutter 41 wird an der Stellschraube 33 so nah an den Trägerarm 42 geschraubt, dass die Stellschraube 33 zwar noch drehbar, aber axial unbeweglich ist und jede Drehung der Stellschraube 33 folglich eine axiale Verschiebung des Kettenrades 8 antreibt. Wenn die Stellung des Kettenrades 8 erfolgreich justiert ist, wird die Mutter 41 gegen den Trägerarm 42 festgezogen, so dass die Stellschraube 33 drehfest gehalten ist und folglich auch keine axiale Bewegung des Kettenrades 8 mehr möglich ist.

Wie man leicht sieht, können an einer Welle 6 entweder nur eine Stellschraube 14 oder ein Trägerarm 42 montiert werden, so dass, wenn eine Welle 6 wie oben erläutert zwei Kettenräder 8 trägt, nur eines davon justierbar ist. Dies stellt jedoch kein Problem dar, da die Ketten 9, 12, 13 so montiert werden können, dass keine mehr als ein nicht justierbares Kettenrad umschlingt.

### Bezugszeichen

- 1: Rundballenpresse
- 2: vordere Halbschale
- 3: hintere Halbschale
- 4: Presskammer
- 5: Achse
- 6: Welle
- 7: Pressrolle
- 8: Kettenrad
- 9: Kette
- 10: Antriebsrad
- 11: Kegelradgetriebe
- 12: Kette
- 13: Kette
- 14: Stellschraube
- 15: Keilwellenprofil
- 16: Durchgang
- 17: Keilwellenprofil
- 18: Radscheibe
- 19: Schaft
- 20: Gewinde
- 21: Stellschraube
- 22: Kopf
- 23: Schaft
- 24: Bohrung
- 25: Gewindebohrung
- 26: Stirnseite
- 27: Schraube
- 28: Bohrung
- 29: Stift
- 30: Nut
- 31: Öffnung
- 32: Trägerarm
- 33: Stellschraube
- 34: Schenkel
- 35: Öffnung
- 36: Schraube
- 37: Schaftabschnitt
- 38: Gewindeabschnitt
- 39: Mutter
- 40: Gewindebohrung
- 41: Mutter
- 42: Trägerarm

## Patentansprüche

1. Rundballenpresse (1) mit einer Mehrzahl von um eine Presskammer (4) herum angeordneten Pressrollen (7) und Wellen (6), die von einer gemeinsamen Kette (9, 12, 13) angetriebene Kettenräder (8) tragen, **dadurch gekennzeichnet, dass** wenigstens eines der Kettenräder (8) und die es tragende Welle (6) zusammenwirkende Führungsmittel (15,17) aufweisen, die das Kettenrad (8) und die Welle (6) in Drehrichtung formschlüssig verbinden und eine Bewegung des Kettenrades (8) in Axialrichtung der Welle (6) zulassen, und dass Mittel (14, 29; 33, 39; 33,41) zum Fixieren der axialen Position des Kettenrades (8) an der Welle (6) vorgesehen sind.

2. Rundballenpresse nach Anspruch 1, **dadurch gekennzeichnet, dass** maximal eines der Kettenräder (8) axial nicht verstellbar ist.

3. Rundballenpresse nach Anspruch 1 oder 2, **dadurch gekennzeichnet, dass** die zusammenwirkenden Führungsmittel komplementäre Keilwellenprofile (15, 17) der Welle (6) und des Kettenrads (8) umfassen.

4. Rundballenpresse nach Anspruch 1, 2 oder 3, **dadurch gekennzeichnet, dass** eine Stellschraube (14; 33) in Bezug auf Welle (6) und Kettenrad (8) drehbar und mit wenigstens einem unter Kettenrad (8) und Welle (6) ausgewählten Bauteil über einen Gewindeeingriff verbunden ist.

5. Rundballenpresse nach Anspruch 4, **dadurch gekennzeichnet, dass** ein Stift (29) durch eine Bohrung (28) der Stellschraube (14) hindurch in eine Aussparung (30) der Welle (6) oder des Kettenrades einführbar ist, um die Stellschraube (14) drehfest zu fixieren.

6. Rundballenpresse nach Anspruch 4 oder 5, **dadurch gekennzeichnet, dass** die Stellschraube (14) ein sich rings um die Welle (6) erstreckendes Gewinde aufweist.

7. Rundballenpresse nach Anspruch 6, **dadurch gekennzeichnet, dass** das Gewinde der Stellschraube (14) ein Innengewinde ist, das mit einem Außengewinde (20) an einem Schaft (19) des Kettenrades (8) zusammenwirkt.

8. Rundballenpresse nach Anspruch 4, **dadurch gekennzeichnet, dass** die Stellschraube (33) mit der Welle (6) über einen Trägerarm (32; 42) verbunden ist, der von der Welle (6) radial absteht und einen ersten Durchgang aufweist, in dem die Stellschraube (33) drehbar aufgenommen ist.

9. Rundballenpresse nach Anspruch 8, **dadurch gekennzeichnet, dass** die Stellschraube (33) ferner in einem zweiten Durchgang (40) des Kettenrades drehbar aufgenommen ist und dass wenigstens einer der Durchgänge (40) ein Gewinde aufweist, das mit einem Gewinde der Stellschraube (33) zusammenwirkt.

10. Rundballenpresse nach Anspruch 9, **dadurch gekennzeichnet, dass** die Stellschraube (33) in dem anderen Durchgang axial unbeweglich gehalten ist.

11. Rundballenpresse nach Anspruch 10, **dadurch gekennzeichnet, dass** der andere Durchgang der Durchgang des Trägerarms (42) ist.

12. Rundballenpresse nach einem der Ansprüche 9 bis 11, **dadurch gekennzeichnet, dass** die Stellschraube (33) eine Kontermutter (41) trägt.

13. Rundballenpresse nach einem der Ansprüche 8 bis 12, **dadurch gekennzeichnet, dass** der Trägerarm (32) als am Umfang der Welle (6) fixierte Spannschelle ausgebildet ist.

14. Rundballenpresse nach einem der Ansprüche 8 bis 12, **dadurch gekennzeichnet, dass** der Trägerarm (42) an eine Stirnseite (26) der Welle (6) angeschraubt ist.
